# EUROPÄISCHE PATENTSCHRIFT

(11) **EP 3 802 292 B1**
(45) Veröffentlichungstag und Bekanntmachung des Hinweises auf die Patenterteilung: **11.05.2022**
(21) Anmeldenummer: 19762712.8
(22) Anmeldetag: 20.03.2019
(51) Int. Cl.: B62D 37/02, B62D 35/00

(54) **HECKSEITIGE LUFTLEITVORRICHTUNG FÜR EIN FAHRZEUG**
REAR AIR GUIDE DEVICE FOR A VEHICLE
DISPOSITIF DE GUIDAGE D'AIR ARRIÈRE POUR VÉHICULE

(30) Priorität: 04.06.2018 DE 102018208749
(43) Veröffentlichungstag der Anmeldung: 14.04.2021
(73) Patentinhaber: Audi AG, 85045 Ingolstadt (DE)
(72) Erfinder: GÖBEL, Theresa, 85111 Möckenlohe (DE)
(86) Internationale Anmeldenummer: PCT/EP2019/056950
(87) Internationale Veröffentlichungsnummer: WO 2019/233648

(56) Entgegenhaltungen:
- DE-A1-102008 039 480
- DE-A1-102014 104 157
- DE-A1-102015 118 072
- DE-A1-102016 105 994
- DE-B4- 10 063 581
- JP-A- S60 146 747

## Beschreibung

Die Erfindung betrifft ein Fahrzeug mit einer heckseitigen Luftleitvorrichtung.

Anbauteile für Fahrzeuge, insbesondere Luftleitelemente bzw. Spoiler, welche die Strömung um das Fahrzeug bzw. die Aerodynamik des Fahrzeugs verbessern, sind in zahlreichen Variationen bekannt. Zudem sind korrespondierende Luftleitvorrichtungen für Fahrzeuge mit mindestens einem Luftleitelement bekannt, wobei eine Stellvorrichtung das mindestens eine Luftleitelement zwischen einer ersten Endstellung und einer zweiten Endstellung bewegt.

Aus der DE 199 02 289 A1 ist eine Luftleitvorrichtung mit einem beweglich gelagerten Luftleitelement bekannt. Hierbei kann das Luftleitelement zwischen einer ersten Endstellung und einer zweiten Endstellung bewegt werden. In der ersten Endstellung ist das Luftleitelement innerhalb der Fahrzeugkontur angeordnet. In der zweiten Endstellung überragt das Luftleitelement die Fahrzeugkontur. Das Luftleitelement weist ein Material auf, welches in der ersten Endstellung einander überdeckende Lagen bildet. Beim Übergang in die zweite Endstellung können die einander überdeckenden Lagen zu Gunsten einer gestreckten Aufeinanderfolge der Lagen aufgehoben werden.

Aus der DE 10 2015 008 474 A1 ist eine Luftleitvorrichtung bekannt, welche mindestens ein Luftleitelement aufweist, welches im Bereich einer Heckscheibe des Fahrzeugs angeordnet ist. Das mindestens eine Luftleitelement ist mittels mindestens eines Aktors entlang einer Führung bewegbar, wobei die Länge des mindestens einen Luftleitelements in Querrichtung des Fahrzeugs bei einer Bewegung entlang der Führung veränderbar ist.

Aus der DE 10 2008 036 283 A1 ist eine heckseitige Luftleitvorrichtung bekannt, welche an einer Dachhinterkante an einer mit einer Heckscheibe versehenen Heckklappe angeordnet ist. Eine obere Anströmfläche der Luftleitvorrichtung verläuft in Verlängerung der vorgelagerten Dachoberseite und die Luftleitvorrichtung überragt einen oberen Randbereich der Heckscheibe.

Aus der DE 10 2016 105 994 A1 ist eine Luftleiteinrichtung im Heckbereich eines Kraftfahrzeuges bekannt, welche einen Spoiler umfasst, der mittels einer Verstelleinrichtung aus einer Ruhestellung in eine Betriebsstellung über-führbar ist, und umgekehrt. Hierbei ist der Spoiler im Heckbereich des Dachs integriert, wobei zumindest ein Teil des Dachspoilers mittels der Verstelleinrichtung translatorisch über das Dachende hinaus verstellbar ist.

Aus der DE 10 2015 118 072 A1 ist eine Luftleitvorrichtung für einen Heckbereich eines Fahrzeugs, mit einem Montageelement, über welches die Luftleitvorrichtung an dem Heckbereich des Fahrzeugs montierbar ist, mit einem Luftleitelement, welches zwischen einer eingefahrenen Ruhestellung und einer ausgefahrenen Betriebsstellung verlagerbar ist; mit einer ein erstes Verlagerungselement und ein zweites Verlagerungselement aufweisenden Verlagerungseinrichtung, über welche das Luftleitelement zwischen der Ruhestellung und der Betriebsstellung verlagerbar ist, und mit einer Verschlusseinrichtung bekannt, über welche ein sich in der ausgefahrenen Betriebsstellung des Luftleitelements zwischen dem Luftleitelement und dem Montageelement ausbildender Spalt verschließbar ist. Die Verschlusseinrichtung ist als textiles Flächengebilde ausgebildet, welches zum Verschließen des Spalts aufspannbar ist.

Aus der DE 10 2008 039 480 A1 ist eine Luftleitvorrichtung im Heckbereich eines Kraftfahrzeugs, insbesondere eines Personenkraftwagens, mit einem Spoiler bekannt, welcher mittels einer Verstelleinrichtung von einer Ruhestellung in eine Betriebsstellung verlagerbar ist und umgekehrt. Am Spoiler ist eine in Bezug auf eine Karosserie des Kraftfahrzeugs und/oder des Spoilers verstellbare Abrisskante angeordnet, wobei die Verstellbewegung der Abrisskante im Wesentlichen während der Verstellbewegung des Spoilers und/oder nach erreichter Betriebsstellung des Spoilers erfolgt.

Aus der DE 10 2014 104 157 A1 eine heckseitige Luftleitvorrichtung für ein Vollheck-Kraftfahrzeug bekannt, welche im Bereich einer Dachhinterkante oberhalb einer Heckscheibe angeordnet ist und ein Luftleitelement umfasst, welches aus einer Ruhestellung in mindestens eine Wirkstellung bewegbar ist. Zudem ist eine Spaltabdichteinrichtung vorgesehen, welche einen in der Wirkstellung vorhandenen Spalt zwischen einer Vorderkante des Luftleitelements und einer in einem Fahrbetrieb mit Luft umströmten Karosseriefläche abdichtet.

Der Erfindung liegt die Aufgabe zu Grunde, ein Fahrzeug mit einer heckseitigen Luftleitvorrichtung bereitzustellen, welche eine Beeinträchtigung einer Hecksicht verringert.

Diese Aufgabe wird durch ein Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um ein Fahrzeug mit einer heckseitigen bereitzustellen, welche eine Beeinträchtigung einer Hecksicht verringert, ist mindestens ein erste Luftleitelement schwenkbar zwischen einer ersten Endstellung und einer zweiten Endstellung gelagert, wobei mindestens ein mit dem mindestens einen ersten Luftleitelement gekoppeltes zweites Luftleitelement in der zweiten Endstellung einen Spalt zwischen dem mindestens einen ersten Luftleitelement und dem Karosserieelement überspannt. Zudem ist das Karosserieelement als Heckklappe ausgeführt, wobei eine erste obere Anströmfläche des mindestens einen ersten Luftleitelements eine Oberseite eines Dachelements und einen oberen Bereich der Heckklappe in der ersten Endstellung verlängert. Hierbei kann in vorteilhafter Weise die Abrisskante der über ein Dach geführten Luftströmung in der ersten Endstellung nach hinten verlagert werden. Hierbei überragt das mindestens eine erste Luftleitelement einen schmalen Bereich der Heckscheibe. Des Weiteren ist die erste obere Anströmfläche des mindestens einen ersten Luftleitelements fluchtend zur Oberseite des Dachelements und des oberen Bereichs der Heckklappe angeordnet. Durch die fluchtende Anordnung kann eine optisch ansprechende durchgängige Linie des Dachs in beiden Endstellungen geschaffen werden. Zudem kann das Entstehen von aerodynamisch ungünstigen Verwirbelungen im Heckbereich in vorteilhafter Weise teilweise oder vollständig durch eine solche fluchtende Anordnung verhindert werden.

Unter einem Luftleitelement wird im Folgenden ein in Fahrzeugquerrichtung verlaufendes Bauelement verstanden, welches die heckseitige Abrisskante der Luftströmung nach hinten verlagert, wodurch ein Totwassergebiet hinter dem Fahrzeug verkleinert werden kann.

Die erfindungsgemäße Luftleitvorrichtung kann insbesondere an einem Sport Utility Vehicle (SUV) und an Kraftfahrzeugen mit ähnlicher Silhouette eingesetzt werden. Diese Fahrzeuge können beispielsweise ein Steilheck aufweisen.

In vorteilhafter Weise kann das mindestens eine erste Luftleitelement durch eine Stellvorrichtung geschwenkt werden. Hierbei kann die Schwenkachse in Fahrzeugquerrichtung verlaufen und die Stellvorrichtung kann das mindestens eine erste Luftleitelement in einer Fahrzeuglängs-Fahrzeughoch-Ebene bewegen. Durch die Schwenkbewegung des mindestens einen ersten Luftleitelements von der ersten Endstellung in die zweite Endstellung und durch das Überspannen des Spaltes durch das mindestens eine zweite Luftleitelement, kann die heckseitige Abrisskante der Luftströmung bei Bedarf in Fahrzeuglängsrichtung mit geringem Aufwand nach hinten verlagert werden, wodurch das Totwassergebiet hinter dem Fahrzeug in vorteilhafter Weise verkleinert werden kann. Da das mindestens eine zweite Luftleitelement mit dem ersten Luftleitelement gekoppelt ist, kann das mindestens eine zweite Luftleitelement von dem mindestens einen ersten Luftleitelement angetrieben werden. Hierbei können das mindestens eine erste Luftleitelement und das mindestens eine zweite Luftleitelement in der ersten Endstellung eine Sicht nach hinten durch eine Heckscheibe in vorteilhafter Weise freigeben. In der zweiten Endstellung können das mindestens eine erste Luftleitelement und das mindestens eine zweite Luftleitelement die Aerodynamik des Fahrzeugs verbessern und dadurch einen Kraftstoffverbrauch senken und/oder eine Reichweite des Fahrzeugs erhöhen. Zudem kann die erste Endstellung des mindestens einen ersten Luftleitelements und des mindestens einen zweiten Luftleitelements einer Position entsprechen, in welcher das optische Erscheinungsbild des Fahrzeugs positiv beeinflusst wird. Die zweite Endstellung kann in vorteilhafter Weise beispielsweise beim Erreichen eines vorgegeben Geschwindigkeitsbereichs eingenommen werden.

In vorteilhafter Ausgestaltung des erfindungsgemäßen Fahrzeugs kann in der ersten Endstellung das mindestens eine erste Luftleitelement an dem Karosserieelement anliegen und das mindestens eine zweite Luftleitelement kann in einer Ablage angeordnet werden. Hierbei kann das mindestens eine zweite Luftleitelement mit dem Karosserieelement und mit dem mindestens einen ersten Luftleitelement verbunden werden. Dadurch, dass das mindestens eine erste Luftleitelement in der ersten Endstellung an dem Karosserieelement anliegt und an das Karosserieelement angepasst werden kann, kann die äußere Erscheinung des Fahrzeugs und eine Sicht nach hinten geringfügig bis gar nicht negativ beeinflusst werden. In der zweiten Endstellung kann das mindestens eine erste Luftleitelement in vorteilhafter Weise von dem Karosserieelement weggeschwenkt werden um die Umströmung des Fahrzeugs zu verbessern.

In weiterer vorteilhafter Ausgestaltung des erfindungsgemäßen Fahrzeugs kann die Ablage innerhalb des Karosserieelements oder innerhalb des mindestens einen ersten Luftleitelements angeordnet werden. Dadurch kann in vorteilhafter Weise eine flexible an das Fahrzeugmodell angepasste Aufbewahrung des mindestens einen zweiten Luftleitelements in der ersten Endstellung geschaffen werden.

In weiterer vorteilhafter Ausgestaltung des erfindungsgemäßen Fahrzeugs kann in der zweiten Endstellung die erste obere Anströmfläche des mindestens einen ersten Luftleitelements und eine zweite obere Anströmfläche des mindestens einen zweiten Luftleitelements die Oberseite des Dachelements und den oberen Bereich der Heckklappe verlängern. Dadurch kann in vorteilhafter Weise die Abrisskante der über das Dach geführten Luftströmung in der zweiten Endstellung weiter nach hinten verlagert werden, um die Aerodynamik des Fahrzeugs weiter zu verbessern. Hierbei überragen das mindestens eine erste Luftleitelement und das mindestens eine zweite Luftleitelement einen größeren Bereich der Heckscheibe als in der ersten Endstellung. Da die zweite Endstellung vorzugsweise bei hohen Geschwindigkeiten eingenommen wird, wird bei geringen Geschwindigkeiten beispielsweise beim Einparken oder beim Rückwärtsfahren oder im dichten Stadtverkehr die Sicht nach hinten in vorteilhafter Weise nur geringfügig von dem mindestens einen ersten Luftleitelement eingeschränkt.

In weiterer vorteilhafter Ausgestaltung des erfindungsgemäßen Fahrzeugs kann das mindestens eine erste Luftleitelement mit mindestens zwei fahrzeugseiteigen Lagern gekoppelt werden. Die mindestens zwei fahrzeugseiteigen Lager können hierbei an gegenüberliegenden Fahrzeugseiten angeordnet werden und ermöglichen ein Schwenken des mindestens einen ersten Luftleitelements um eine zwischen den beiden Lagern in Fahrzeugquerrichtung verlaufende Schwenkachse.

In einer alternativen Ausgestaltung des erfindungsgemäßen Fahrzeugs kann das mindestens eine erste Luftleitelement mit mindestens einem drehbar gelagerten Hebel gekoppelt werden. Hierbei kann der Hebel in vorteilhafter Weise Element eines Mehrgelenkscharniers sein. Beispielsweise kann ein erster Endbereich des mindestens einen Hebels fahrzeugseitig gelagert und ein zweiter Endbereich des mindestens einen Hebels kann am mindestens einen ersten Luftleitelement gelagert werden. Durch das Schwenken des mindestens einen Hebels kann das mindestens eine erste Luftleitelement in vorteilhafter Weise zwischen der ersten Endstellung und der zweiten Endstellung bewegt werden.

In weiterer vorteilhafter Ausgestaltung des erfindungsgemäßen Fahrzeugs kann das mindestens eine erste Luftleitelement als Bügel mit einem L-förmigen Profil ausgeführt werden. Der Bügel kann zwei Endbereiche umfassen, zwischen welchen ein in Fahrzeugquerrichtung verlaufendes Mittelteil angeordnet ist. Die Endbereiche können in vorteilhafter Weise mit den fahrzeugseitigen Lagern gekoppelt werden.

In weiterer vorteilhafter Ausgestaltung des erfindungsgemäßen Fahrzeugs kann das mindestens eine zweite Luftleitelement als flexible Materialbahn ausgeführt werden. Beispielsweise kann die flexible Materialbahn aus einem Cabrioverdeckstoff bestehen. In vorteilhafter Weise kann die flexible Materialbahn in der ersten Endstellung einfach in der Ablage abgelegt werden. Beispielsweise kann die flexible Materialbahn an einer in der Ablage angeordneten Wickelrolle befestigt und aufgerollt werden. Alternativ kann die flexible Materialbahn gezielt angeordnete Nähte aufweisen, welche mit Hilfe von Seilen zu einer gewünschten Faltung der flexiblen Materialbahn in der Ablage führen können.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische Seitenansicht eines Fahrzeughecks mit einem ersten Ausführungsbeispiel einer erfindungsgemäßen Luftleitvorrichtung in einer ersten Endstellung;
- Fig. 2: eine schematische Seitenansicht des Fahrzeughecks aus Fig. 1 mit der erfindungsgemäßen Luftleitvorrichtung in einer zweiten Endstellung;
- Fig. 3: eine schematische Seitenansicht eines Fahrzeughecks mit einem zweiten Ausführungsbeispiel einer erfindungsgemäßen Luftleitvorrichtung in einer ersten Endstellung; und
- Fig. 4: eine schematische Seitenansicht des Fahrzeughecks aus Fig. 3 mit der erfindungsgemäßen Luftleitvorrichtung in einer zweiten Endstellung.

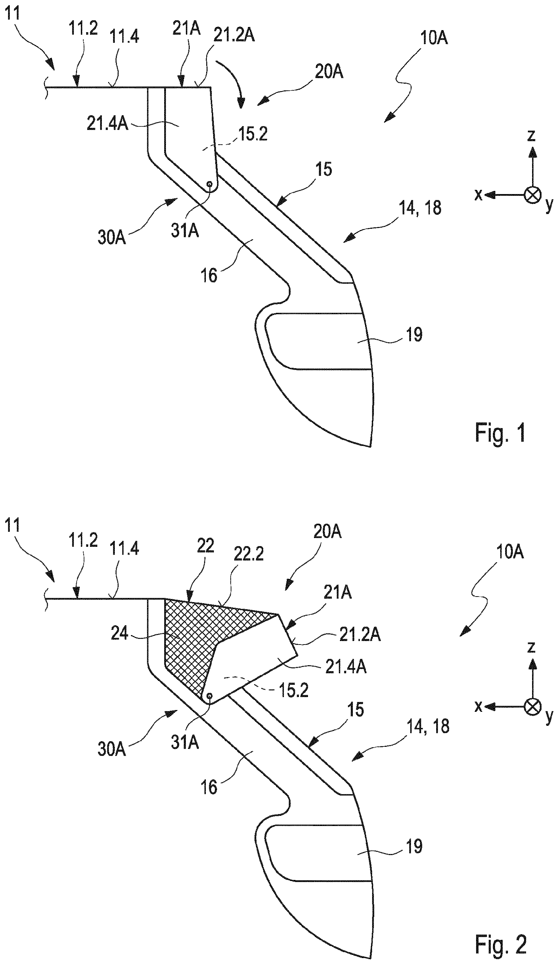

Wie aus Fig. 1 bis 4 ersichtlich ist, umfasst eine heckseitige Luftleitvorrichtung 20A, 20B für ein Fahrzeug mindestens ein erstes Luftleitelement 21A, 21B wobei eine Stellvorrichtung 30A, 30B das mindestens eine erste Luftleitelement 21A, 21B zwischen einer ersten Endstellung und einer ein Karosserieelement 18 verlängernden zweiten Endstellung bewegt.

Hierbei ist das mindestens eine erste Luftleitelement 21A, 21B schwenkbar zwischen der ersten Endstellung und der zweiten Endstellung gelagert, wobei mindestens ein mit dem mindestens einen ersten Luftleitelement 21A, 21B gekoppeltes zweites Luftleitelement 22 in der zweiten Endstellung einen Spalt 24 zwischen dem mindestens einen ersten Luftleitelement 21A, 21B und dem Karosserieelement 18 überspannt.

Wie aus Fig. 1 bis 4 weiter ersichtlich ist, umfasst das Fahrzeugheck 10A, 10B ein Dach 11 mit einer Oberseite 11.4, wobei an der Oberseite 11.4 eine Luftströmung geführt wird. Zudem umfasst das Fahrzeugheck 10A, 10B eine Heckklappe 14, welche eine Heckscheibe 15 umfasst. Die Heckscheibe 15 wird von zwei in Fahrzeughochrichtung z verlaufenden Seitenrahmenelementen 16 seitlich begrenzt. Zudem umfasst das Fahrzeugheck 10A, 10B an jeder Fahrzeugseite mindestens ein Rücklicht 19 und die erfindungsgemäße Luftleitvorrichtung 20A, 20B.

Wie aus Fig. 1 bis 4 weiter ersichtlich ist, umfasst die erfindungsgemäße Luftleitvorrichtung 20A, 20B in den dargestellten Ausführungsbeispielen jeweils ein erstes Luftleitelement 21A, 21B und ein zweites Luftleitelement 22. In einem alternativen nicht dargestellten Ausführungsbeispielen kann die erfindungsgemäße Luftleitvorrichtung 20A, 20B noch weitere Luftleitelemente aufweisen. Von der Stellvorrichtung 30A; 30B sind lediglich die Lager 31A, 34B, 36B und falls vorhanden die Hebel 31B, 32B dargestellt. Sie Stellvorrichtung 30A, 30B kann zudem einen nicht dargestellten Antrieb aufweisen.

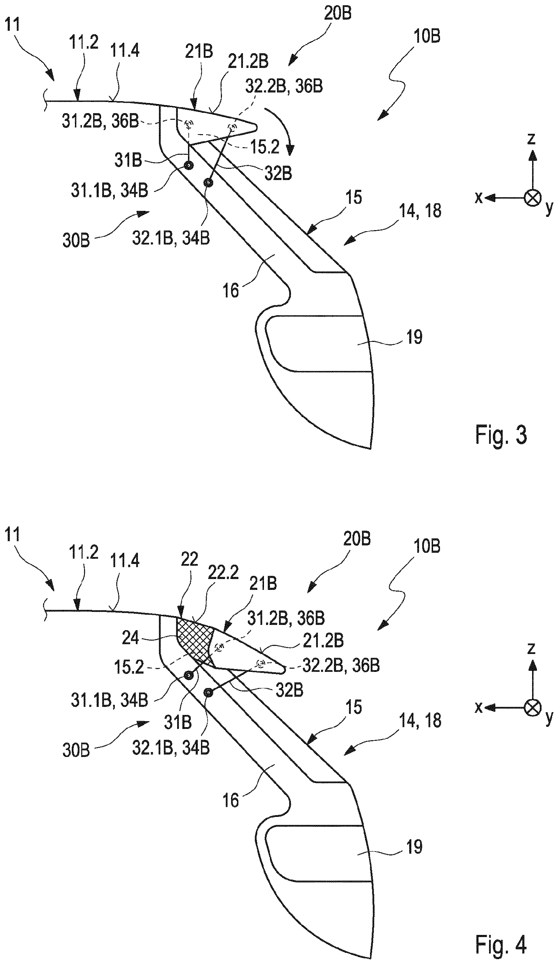

Wie aus Fig. 1 und 3 weiter ersichtlich ist, liegt das erste Luftleitelement 21A, 21B in der ersten Endstellung an dem Karosserieelement 18 an. Das zweite Luftleitelement 22 ist in der ersten Endstellung in einer nicht dargestellten Ablage angeordnet. Die Ablage kann hierbei innerhalb des Karosserieelements 18 oder innerhalb des ersten Luftleitelements 21A, 21B angeordnet werden. Bevorzugt wird die Ablage innerhalb des ersten Luftleitelements 21A, 21B angeordnet, um an der Karosserie Bauraum einzusparen. In den dargestellten Ausführungsbeispielen der erfindungsgemäßen Luftleitvorrichtung 20A, 20B ist das Karosserieelement 18, an welchem das erste Luftleitelement 21A, 21B in der ersten Endstellung anliegt, als Heckklappe 14 ausgeführt. Eine erste obere Anströmfläche 21.2A, 21.2B des ersten Luftleitelements 21A, 21B verlängert eine Oberseite 11.4 eines Dachelements 11.2 und einen oberen Bereich der Heckklappe 18, wobei die erste obere Anströmfläche 21.2A, 21.2B fluchtend zur Oberseite 11.4 des Dachelements 11.2 und zum oberen Bereich der Heckklappe 18 angeordnet ist. Dadurch wird die Abrisskante der über das Dach 11 geführten Luftströmung in der ersten Endstellung nach hinten verlagert. Hierbei überragt das erste Luftleitelement 21A, 21B einen schmalen oberen Randbereich 15.2 der Heckscheibe 15.

Wie aus Fig. 1 bis 4 weiter ersichtlich ist, unterscheiden sich die dargestellten Ausführungseispiele der erfindungsgemäßen Luftleitvorrichtung 20A, 20B unter anderem durch die Form des ersten Luftleitelements 21A, 21B. Im in Fig. 1 und 2 dargestellten ersten Ausführungsbeispiel der erfindungsgemäßen Luftleitvorrichtung 20A ist das erste Luftleitelement 21A als Bügel mit einem L-förmigen Profil ausgeführt, welcher zwei Endbereiche 21.4A aufweist. Zwischen den Endbereichen weist das erste Luftleitelement 21A einen Mittelteil auf. Im in Fig. 3 und 4 dargestellten zweiten Ausführungsbeispiel der erfindungsgemäßen Luftleitvorrichtung 20B ist das erste Luftleitelement 21B als Fortsatz des Dachelements 11.2 und der Heckklappe 18 ausgeführt und weist einen V-förmigen Querschnitt auf, wobei der schmale Endbereich nach hinten ausgerichtet ist und der breite Endbereich dem Dachelement 11.2 bzw. der Heckklappe 18 zugewandt ist.

Wie aus Fig. 2 und 4 weiter ersichtlich ist, überspannt das zweite Luftleitelement 22 in der zweiten Endstellung einen Spalt 24 zwischen dem ersten Luftleitelement 21A, 21B und dem Karosserieelement 18. In den dargestellten Ausführungsbeispielen der erfindungsgemäßen Luftleitvorrichtung 20A, 20B ist das mindestens eine zweite Luftleitelement 22 mit einem Karosserieelement 18 und mit dem ersten Luftleitelement 21A, 21B verbunden. Wenn das erste Luftleitelement 21A, 21B von der ersten Endstellung in die zweite Endstellung geschwenkt wird, entfernt sich das erste Luftleitelement 21A, 21B zumindest abschnittsweise von der Heckklappe 18. Da das zweite Luftleitelement 22 mit dem ersten Luftleitelement 21A, 21B verbunden ist, wird das zweite Luftleitelement 22 mitgezogen und aus der Ablage bewegt. Das zweite Luftleitelement 22 ist im dargestellten Ausführungsbeispiel als flexible Materialbahn ausgeführt. Vorzugsweise kann ein Cabrioverdeckstoff als flexible Materialbahn eingesetzt werden, welcher in der Ablage auf einer nicht dargestellten Wickelrolle aufgerollt ist. Die Wickelrolle ist mittels Federanordnung so beaufschlagt, dass sie die Materialbahn straff spannt.

Wie aus Fig. 2 und 4 weiter ersichtlich ist, verlängern in der zweiten Endstellung die erste obere Anströmfläche 21.2A, 21.2B des ersten Luftleitelements 21A, 21B und eine zweite obere Anströmfläche 22.2 des zweiten Luftleitelements 22 die Oberseite 11.4 des Dachelements 11.2 und den oberen Bereich der Heckklappe 18. Dadurch wird die Abrisskante der über das Dach 11 geführten Luftströmung in der zweiten Endstellung weiter nach hinten verlagert als in der ersten Endstellung. Zudem überragen das erste Luftleitelement 21A, 21B und das zweite Luftleitelement 22 einen größeren oberen Randbereich 15.2 der Heckscheibe 15 als in der ersten Endstellung. Das erste Luftleitelement 21A, 21B und das zweite Luftleitelement 22 werden bei Bedarf, insbesondere bei vorgegeben Geschwindigkeiten, von der Stellvorrichtung 30A, 30B in die zweite Endstellung oder in die erste Endstellung überführt.

Wie aus Fig. 1 und 2 weiter ersichtlich ist weist die Stellvorrichtung 30A im dargestellten ersten Ausführungsbeispiel der erfindungsgemäßen Luftleitvorrichtung 20A zwei fahrzeugseitige Lager 31A auf, mit welchen das erste Luftleitelement 21A gekoppelt ist. Von den beiden Lagern 31A ist lediglich eines sichtbar. Die beiden Lager 31A sind jeweils an den Seitenrahmenelementen 16 angeordnet. Zwischen den beiden Lagern 31A verläuft die Schwenkachse in Fahrzeugquerrichtung y. Die beiden Endbereiche 21.4A des ersten Luftleitelements 21A können an dem jeweiligen Lager 31A geschwenkt werden.

Wie aus Fig. 3 und 4 weiter ersichtlich ist, weist die Stellvorrichtung 30B im dargestellten zweiten Ausführungsbeispiel der erfindungsgemäßen Luftleitvorrichtung 20B Mehrgelenkscharniere auf, welche zumindest an den Endbereichen des ersten Luftleitelements 21B angeordnet sind. Im dargestellten Ausführungsbeispiel entspricht das Mehrgelenkscharnier einem Viergelenkscharnier mit zwei Hebeln 31B, 32B und vier Lagern 34B, 36B, wobei ein erster Hebel 31B in Fahrtrichtung x vor einem zweiten Hebel 32B angeordnet ist. Ein erster Endbereich 31.1B, 32.1B der Hebel 31B, 32B ist jeweils fahrzeugseitig an einem korrespondierenden ersten Lager 34B gelagert und ein zweiter Endbereich 31.2B, 32.2 der Hebels 31B, 32B ist jeweils an einem korrespondierenden zweiten Lager 36B am ersten Luftleitelement 21B gelagert. Durch das Schwenken der Hebel 31B, 32B wird das erste Luftleitelement 21B zwischen der ersten Endstellung und der zweiten Endstellung bewegt. Hierbei ist die erste obere Anströmfläche 21.2B des ersten Luftleitelements 21B auch in der zweiten Endstellung fluchtend zur Oberseite 11.4 des Dachelements 11.2 bzw. zum oberen Bereich der Heckklappe 18 angeordnet. In einem alternativen nicht dargestellten Ausführungsbeispiel der erfindungsgemäßen Luftleitvorrichtung 20A, 20B kann das erste Luftleitelement 21B lediglich mit einem drehbar gelagerten Hebel 31B, 32B gekoppelt werden. Alternativ oder zusätzlich kann mindestens ein Hebel 31B, 32B mehrteilig ausgeführt werden wobei zwei einander zugewandte Endbereiche über ein Gelenk miteinander verbunden sind.

### BEZUGSZEICHENLISTE

- 10A, 10B: Fahrzeugheck
- 11: Dach
- 11.2: Dachelement
- 11.4: Oberseite
- 14: Heckklappe
- 15: Heckscheibe
- 15.2: oberer Randbereich (wird vom Luftleitelement überlagert)
- 16: Seitenrahmenelemente
- 18: Karosserieelement
- 19: Rücklicht
- 20A, 20B: Luftleitvorrichtung
- 21A, 21B: erstes Luftleitelement
- 21.2A, 21.2B: erste obere Anströmfläche
- 21.4A: Endbereich
- 22: zweites Luftleitelement
- 22.2: zweite obere Anströmfläche
- 24: Spalt
- 30A, 30B: Stellvorrichtung
- 31A: Lager
- 31B: erster Hebel
- 32B: zweiter Hebel
- 31.1B, 32.1B: erster Endbereich
- 31.2B, 32,2B: zweiter Endbereich
- 34B: erstes Lager
- 36B: zweites Lager

## Patentansprüche

1. Fahrzeug mit einer heckseitigen Luftleitvorrichtung (20A, 20B), welche mindestens ein erstes Luftleitelement (21A, 21B) umfasst, wobei eine Stellvorrichtung (30A, 30B) das mindestens eine erste Luftleitelement (21A, 21B) zwischen einer ersten Endstellung und einer ein Karosserieelement (18) verlängernden zweiten Endstellung bewegt,
wobei das mindestens eine erste Luftleitelement (21A, 21B) schwenkbar zwischen der ersten Endstellung und der zweiten Endstellung gelagert ist, wobei mindestens ein mit dem mindestens einen ersten Luftleitelement (21A, 21B) gekoppeltes zweites Luftleitelement (22) in der zweiten Endstellung einen Spalt (24) zwischen dem mindestens einen ersten Luftleitelement (21A, 21B) und dem Karosserieelement (18) überspannt, wobei das Karosserieelement (18) als Heckklappe (18) ausgeführt ist, wobei eine erste obere Anströmfläche (21.2A, 21.2B) des mindestens einen ersten Luftleitelements (21A, 21B) eine Oberseite (11.4) eines Dachelements (11.2) und einen oberen Bereich der Heckklappe (18) in der ersten Endstellung verlängert, und wobei die erste obere Anströmfläche (21.2B) des mindestens einen ersten Luftleitelements (21B) fluchtend zur Oberseite (11.4) des Dachelements (11.2) und zum oberen Bereich der Heckklappe (18) angeordnet ist.

2. Fahrzeug nach Anspruch 1,
**dadurch gekennzeichnet, dass**
in der ersten Endstellung das mindestens eine erste Luftleitelement (21A, 21B) an dem Karosserieelement (18) anliegt und das mindestens eine zweite Luftleitelement (22) in einer Ablage angeordnet ist.

3. Fahrzeug nach Anspruch 2,
**dadurch gekennzeichnet, dass**
die Ablage innerhalb des Karosserieelements (18) oder innerhalb des mindestens einen ersten Luftleitelements (21A, 21B) angeordnet ist.

4. Fahrzeug nach einem der Ansprüche 1 bis 3,
**dadurch gekennzeichnet, dass**
in der zweiten Endstellung die erste obere Anströmfläche (21.2A, 21.2B) des mindestens einen ersten Luftleitelements (21A, 21B) und eine zweite obere Anströmfläche (22.2) des mindestens einen zweiten Luftleitelements (22) die Oberseite (11.4) des Dachelements (11.2) und den oberen Bereich der Heckklappe (18) verlängern.

5. Fahrzeug nach einem der Ansprüche 1 bis 4,
**dadurch gekennzeichnet, dass**
das mindestens eine erste Luftleitelement (21A) mit mindestens zwei fahrzeugseiteigen Lagern (31A) gekoppelt ist.

6. Fahrzeug nach einem der Ansprüche 1 bis 5,
**dadurch gekennzeichnet, dass**
das mindestens eine erste Luftleitelement (21B) mit mindestens einem drehbar gelagerten Hebel (31B, 32B) gekoppelt ist.

7. Fahrzeug nach Anspruch 6,
**dadurch gekennzeichnet, dass**
ein erster Endbereich (31.1B, 32.1B) des mindestens einen Hebels (31B, 32B) fahrzeugseitig gelagert und ein zweiter Endbereich (31.2B, 32.2) des mindestens einen Hebels (31B, 32B) am mindestens einen ersten Luftleitelement (21B) gelagert ist.

8. Fahrzeug nach einem der Ansprüche 1 bis 7,
**dadurch gekennzeichnet, dass**
das mindestens eine erste Luftleitelement (21A) als Bügel mit einem L-förmigen Profil ausgeführt ist.

9. Fahrzeug nach einem der Ansprüche 1 bis 8,
**dadurch gekennzeichnet, dass**
das mindestens eine zweite Luftleitelement (22) als flexible Materialbahn ausgeführt ist.

## Claims

1. Vehicle having a rear air guide device (20A, 20B) comprising at least one first air guide element (21A, 21B), wherein a control device (30A, 30B) moves the at least one first air guide element (21A, 21B) between a first terminal position and a second terminal position which prolongs a body element (18),
wherein the at least one first air guide element (21A, 21B) is mounted to pivot between the first terminal position and the second terminal position, wherein in the second terminal position at least one second air guide element (22) coupled to the at least one first air guide element (21A, 21B) spans a gap (24) between the at least one first air guide element (21A, 21B) and the body element (18), wherein the body element (18) is designed as a tailgate (18), wherein in the first terminal position a first upper inflow surface (21.2A, 21.2B) of the at least one first air guide element (21A, 21B) prolongs an upper side (11.4) of a roof element (11. 2) and an upper region of the tailgate (18), and wherein the first upper inflow surface (21.2B) of the at least one first air guide element (21B) is arranged flush with the upper side (11.4) of the roof element (11.2) and with the upper region of the tailgate (18).

2. Vehicle according to claim 1,
**characterised in that**
in the first terminal position, the at least one first air guide element (21A, 21B) abuts the body element (18) and the at least one second air guide element (22) is arranged in a storage area.

3. Vehicle according to claim 2,
**characterised in that**
the storage area is arranged within the body element (18) or within the at least one first air guide element (21A, 21B).

4. Vehicle according to any of claims 1 to 3,
**characterised in that**
in the second terminal position, the first upper inflow surface (21.2A, 21.2B) of the at least one first air guide element (21A, 21B) and a second upper inflow surface (22.2) of the at least one second air guide element (22) prolong the upper side (11.4) of the roof element (11.2) and the upper region of the tailgate (18).

5. Vehicle according to any of claims 1 to 4,
**characterised in that**
the at least one first air guide element (21A) is coupled to at least two vehicle-side bearings (31A).

6. Vehicle according to any of claims 1 to 5,
**characterised in that**
the at least one first air guide element (21B) is coupled to at least one rotatably mounted lever (31B, 32B).

7. Vehicle according to claim 6,
**characterised in that**
a first terminal region (31.1B, 32.1B) of the at least one lever (31B, 32B) is mounted on the vehicle and a second terminal region (31.2B, 32.2) of the at least one lever (31B, 32B) is mounted on the at least one first air guide element (21B).

8. Vehicle according to any of claims 1 to 7,
**characterised in that**
the at least one first air guide element (21A) is designed as a bracket having an L-shaped profile.

9. Vehicle according to any of claims 1 to 8,
**characterised in that**
the at least one second air guide element (22) is designed as a flexible material web.

## Revendications

1. Véhicule avec un dispositif de guidage d'air (20A, 20B) côté arrière, lequel comprend au moins un premier élément de guidage d'air (21A, 21B), dans lequel un dispositif de réglage (30A, 30B) déplace l'au moins un premier élément de guidage d'air (21A, 21B) entre une première position d'extrémité et une seconde position d'extrémité prolongeant un élément de carrosserie (18),
dans lequel l'au moins un premier élément de guidage d'air (21A, 21B) est monté de manière pivotante entre la première position d'extrémité et la seconde position d'extrémité, dans lequel l'au moins un second élément de guidage d'air (21A, 21B) couplé à l'au moins un premier élément de guidage d'air (21A, 21B) couvre, dans la seconde position d'extrémité, une fente (24) entre l'au moins un premier élément de guidage d'air (21A, 21B) et l'élément de carrosserie (18), dans lequel l'élément de carrosserie (18) est réalisé en tant que hayon (18), dans lequel une première surface d'écoulement supérieure (21.2A, 21.2B) de l'au moins un premier élément de guidage d'air (21A, 21B) prolonge un côté supérieur (11.4) d'un élément de toit (11.2) et une zone supérieure du hayon (18) dans la première position d'extrémité, et dans lequel la première surface d'écoulement supérieure (21,2B) de l'au moins un premier élément de guidage d'air (21B) est disposée en alignement avec le côté supérieur (11.4) de l'élément de toit (11.2) et avec la zone supérieure du hayon (18).

2. Véhicule selon la revendication 1,
**caractérisé en ce**
**que** dans la première position d'extrémité, l'au moins un premier élément de guidage d'air (21A, 21B) repose contre l'élément de carrosserie (18) et l'au moins un second élément de guidage d'air (22) est disposé dans un rangement.

3. Véhicule selon la revendication 2,
**caractérisé en ce**
**que** le rangement est disposé au sein de l'élément de carrosserie (18) ou au sein de l'au moins un premier élément de guidage d'air (21A, 21B).

4. Véhicule selon l'une quelconque des revendications 1 à 3,
**caractérisé en ce**
**que** dans la seconde position d'extrémité, la première surface d'écoulement supérieure (21,2A, 21,2B) de l'au moins un premier élément de guidage d'air (21A, 21B) et une seconde surface d'écoulement supérieure (22.2) de l'au moins un second élément de guidage d'air (22) prolongent le côté supérieur (11.4) de l'élément de toit (11.2) et la zone supérieure du hayon (18).

5. Véhicule selon l'une quelconque des revendications 1 à 4,
**caractérisé en ce**
**que** l'au moins un premier élément de guidage d'air (21A) est couplé à au moins deux paliers (31A) côté véhicule.

6. Véhicule selon l'une quelconque des revendications 1 à 5,
**caractérisé en ce**
**que** l'au moins un premier élément de guidage d'air (21B) est couplé à au moins un levier (31B, 32B) monté de manière rotative.

7. Véhicule selon la revendication 6,
**caractérisé en ce**
**qu'**une première zone d'extrémité (31.1B, 32.1 B) de l'au moins un levier (31B, 32B) est montée côté véhicule et une seconde zone d'extrémité (31.2B, 32.2) de l'au moins un levier (31B, 32B) est montée sur l'au moins un premier élément de guidage d'air (21B).

8. Véhicule selon l'une quelconque des revendications 1 à 7,
**caractérisé en ce**
**que** l'au moins un premier élément de guidage d'air (21A) est réalisé en tant qu'étrier avec un profil en forme de L.

9. Véhicule selon l'une quelconque des revendications 1 à 8,
**caractérisé en ce**
**que** l'au moins un second élément de guidage d'air (22) est réalisé en tant que bande de matériau flexible.
